# EUROPÄISCHE PATENTSCHRIFT

(11) **EP 0 694 443 B1**
(45) Veröffentlichungstag und Bekanntmachung des Hinweises auf die Patenterteilung: **15.10.1997**
(21) Anmeldenummer: 95111072.5
(22) Anmeldetag: 14.07.1995
(51) Int. Cl.: B60R 21/20, C08L 23/02, C08L 23/16

(54) **Gassack-Abdeckung**
Airbag cover
Couvercle pour airbag

(30) Priorität: 25.07.1994 DE 4426342
(43) Veröffentlichungstag der Anmeldung: 31.01.1996
(73) Patentinhaber: TRW Occupant Restraint Systems GmbH, 73553 Alfdorf (DE)
(72) Erfinder: Nusshör, Bernd, D-73565 Spraitbach (DE)
(74) Vertreter: Degwert, Hartmut, Dipl.-Phys.

(56) Entgegenhaltungen:
- EP-A- 0 292 201
- EP-A- 0 604 776
- GB-A- 2 057 458
- GB-A- 2 254 618

## Beschreibung

Die Erfindung betrifft eine Gassack-Abdeckung für ein Fahrzeuginsassen-Rückhaltesystem, wie z.B. aus EP-A-0 604 776 bekannt.

An eine solche Gassack-Abdeckung werden hohe mechanische Anforderungen gestellt, die über einen weiten Temperaturbereich erfüllt werden müssen. Bekanntlich muß eine solche Abdeckung bei der Aktivierung des Gassacks an einer Reißnaht aufgetrennt und dann aufgeklappt werden, um das Austreten des sich ausdehnenden Gassacks zu ermöglichen. Bei diesem Vorgang dürfen keine scharfen Teile wie Splitter entstehen. Damit die Abdeckung aufgeklappt werden kann, muß ein hohes Maß von Flexibilität vorhanden sein. Andererseits wird eine gewisse Struktursteifigkeit benötigt, damit die Abdeckung im normalen Gebrauch des Fahrzeugs als homogener Bestandteil der Armaturentafel (Beifahrerseite) bzw. als formstabile Abdeckung der Lenkradnabe (Fahrerseite) in Erscheinung tritt. Diese Forderungen konnten bisher nur mit Verbundwerkstoffen erfüllt werden. Dennoch war zu sehr niedrigen Temperaturen hin keine ausreichende Bruchfestigkeit gewährleistet. Verbundwerkstoffe sind im Hinblick auf das angestrebte Recycling problematisch.

Durch die Erfindung wird eine Gassack-Abdeckung für ein Fahrzeuginsassen-Rückhaltesystem geschaffen, die zwar aus mehreren Komponenten besteht, die jedoch auf demselben Grundwerkstoff aufbauen und im Verbund ein hohes Maß von Flexibilität und Strukturfestigkeit über einen weiten Temperaturbereich von - 35°C bis + 85°C gewährleisten, Gemäß der Erfindung weist die Gassack-Abdeckung als Hauptbestandteil zwei miteinander in Verbund gebrachte Schichten eines vollvulkanisierten polyolefinischen Materials auf, das aus vollvernetzten, in einer kontinuierlichen Matrix von thermoplastischem Material verteilten Kautschukteilchen besteht, und die Härte der ersten Schicht beträgt etwa 32 bis 43 Shore D sowie die Härte der zweiten Schicht etwa 45 bis 80 Shore A.

Bei den vollvernetzten Kautschukteilchen handelt es sich vorzugsweise um ein Terpolymer aus Ethylen, Propylen und Dienen (EPDM). Bei dem thermoplastischen Material handelt es sich vorzugsweise um ein Polypropylen (PP).

Die erste Schicht der Gassack-Abdeckung sorgt im wesentlichen für die erforderliche Strukturfestigkeit. Die zweite, im Gebrauch äußere Schicht ist relativ weich und sorgt für ein angenehmes, weiches Berührungsempfinden, das auch als "Softouch" bezeichnet wird. Diese Eigenschaft kann durch eine Beschichtung der zweiten Schicht aus einem Zweikomponenten-Urethan-Lacksystem, das aus einem Haftvermittler und einem Decklack besteht, weiter gesteigert werden. Dieses Lacksystem verbessert überdies die Farb- und Lichtechtheit sowie die Kratzfestigkeit und verschafft einen einheitlichen Farb- und Glanzeffekt.

Die Herstellung der Gassack-Abdeckung erfolgt vorzugsweise durch Spritzgießen der Komponenten für die erste und für die zweite Schicht. Dabei ergibt sich ein inniger Verbund aufgrund der prinzipiell gleichen Materialbeschaffenheit beider Schichten. Ein solches Verfahren ist überdies bei hoher Produktivität durchführbar und trägt zur Kostensenkung bei.

Die Schichtdicke der ersten Schicht kann 1 bis 5 mm und die der zweiten Schicht 1 bis 3 mm betragen. Da bereits bei einer relativ geringen Gesamtdicke eine hohe Struktursteifigkeit zu erreichen ist, ergibt sich auch im Vergleich zu herkömmlichen Abdeckungen ein niedriges Gewicht.

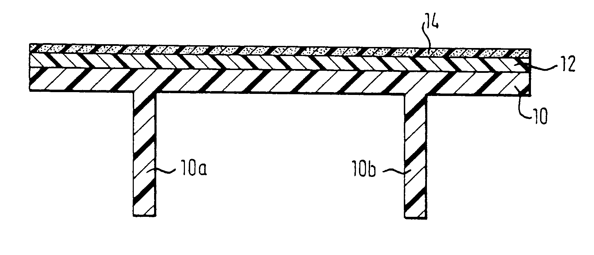

Weitere Merkmale und Vorteile der Erfindung ergeben sich aus der folgenden Beschreibung einer besonderen Ausführungsform unter Bezugnahme auf die beigefügte Zeichnung, deren einzige Figur einen Querschnitt durch eine Gassack-Abdeckung zeigt.

Diese Gassack-Abdeckung umfaßt als Hauptbestandteil eine erste Schicht 10 sowie eine zweite, außenseitige Schicht 12 von etwas geringerer Dicke. Die beiden Schichten 10, 12 bestehen jeweils aus vollvulkanisiertem polyolefinischen Material, das aus vollvernetzten, in einer kontinuierlichen Matrix von thermoplastischem Material verteilten Kautschukteilchen besteht. Beide Schichten 10, 12 werden in einer Form gespritzt, wobei zugleich an die Schicht 10 innenseitige Stützen 10a, 10b angespritzt werden. Schließlich wird die zweite Schicht 12 mit einer Beschichtung 14 aus einem Zweikomponenten-Urethan-Lacksystem versehen, das aus einem Haftvermittler und einem Decklack besteht.

Die Herstellung beider Kautschuk-Werkstoffe erfolgt in einem dynamischen Vulkanisierungsverfahren, das vollvernetzte Kautschukteilchen produziert, die in einer kontinuierlichen Matrix des thermoplastischen Materials verteilt sind. Bei dem Kautschukmaterial handelt es sich um ein Terpolymer aus Ethylen, Propylen und Dienen (EPDM). Das thermoplastische Material ist ein Polypropylen (PP).

Insbesondere gehören die erfindungsgemäß verwendeten Werkstoffe zur Gruppe der Elastomerlegierungen. Elastomerlegierungen sind "Polymerblends" oder -verschnitte, die Thermoplast- und Elastomeranteile enthalten.

Die Herstellung erfolgt durch "Verschneiden", d.h. intensives Vermischen der Ausgangskomponenten (hier PP und EPDM), vorzugsweise unter Zusatz von Vernetzungsmittel. Dabei treten die unterschiedlichsten Mischungsverhältnisse zwischen harter (PP) und weicher Phase (EPDM) auf, wobei die weiche Phase vollvernetzt vorliegt. Das ideale "Blend" enthält kleine Elastomerpartikel, die gleichmäßig feindispers in der Thermoplastmatrix verteilt sind. Je feiner die Verteilung und je höher der Vernetzungsgrad der Elastomerteilchen, um so ausgeprägter sind die elastischen Eigenschaften des resultierenden Werkstoffes.

Bei der dynamischen Vulkanisation werden die Kautschukteilchen während des Misch- und Dispergierprozesses "in situ" vernetzt. Das Eigenschaftsbild dieser Blends hängt demnach wesentlich vom Anteil, vom Vernetzungsgrad und von der Dispergierung der Kautschukteilchen ab.

Durch diese Blendtechnologie sind die verschiedensten Kombinationen herstellbar. Bestimmte Eigenschaften können damit regelrecht "maßgeschneidert" werden. Dabei werden die physikalisch-mechanischen Eigenschaften wie auch die chemische Beständigkeit und Verträglichkeit gegenüber Kontaktmedien im wesentlichen durch die Einzeleigenschaften der Blendkomponenten bestimmt. Durch die Optimierung der "Verschnittgüte" und des Vernetzungsgrades lassen sich bestimmte physikalische Eigenschaften deutlich verbessern.

Die wichtigsten physikalischen Eigenschaften beider Werkstoffe sind in der nachfolgenden Tabelle aufgeführt.

**Tabelle**

| Eigenschaften | Schicht 1 | Schicht 2 |
|---|---|---|
| Dichte nach DIN 53479 | 0,93-0,97 | 0,95-0,99 |
| Härte nach DIN 53505 | 32-43 Shore D | 45-80 Shore A |
| Reißfestigkeit nach ASTM D 412 | 11-21 MPa | 2-12 MPa |
| Reißdehnung nach ASTM D 412 | 470-700 % | 200-600 % |
| ACR Viskosität | 470-770 Poise | 120-680 Poise |

Bei dem Lacksystem, aus dem die Beschichtung 14 besteht, handelt es sich um ein Zweikomponenten-Urethan-System, das aus einem Haftvermittler und einem Decklack besteht. Dieses Lacksystem zeichnet sich durch eine ausgezeichnete Kratz- und Abriebbeständigkeit aus und ergibt besonders in Verbindung mit dem Material, aus dem die zweite Schicht 12 besteht, ein angenehmes, weiches Berührungsempfinden, das in Fachkreisen als "Softtouch feeling" bekannt ist.

## Patentansprüche

1. Gassack-Abdeckung für ein Fahrzeuginsassen-Rückhaltesystem, dadurch gekennzeichnet, daß sie als Hauptbestandteil zwei miteinander in Verbund gebrachte Schichten (10, 12) eines vollvulkanisierten polyolefinischen Materials aufweist, das aus vollvernetzten, in einer kontinuierlichen Matrix von thermoplastischem Material verteilten Kautschukteilchen besteht, und daß die Härte der ersten Schicht (10) etwa 39 bis 40 Shore D sowie die Härte der zweiten, außenseitigen Schicht (12) etwa 45 bis 73 Shore A beträgt.

2. Gassack-Abdeckung nach Anspruch 1, dadurch gekennzeichnet, daß das Kautschukmaterial ein Terpolymer aus Ethylen, Propylen und Dienen ist.

3. Gassack-Abdeckung nach Anspruch 1 oder 2, dadurch gekennzeichnet, daß das thermoplastische Material ein Polypropylen ist.

4. Gassack-Abdeckung nach einem der vorstehenden Ansprüche, dadurch gekennzeichnet, daß die Dicke der ersten Schicht (10) etwa 1 bis 5mm beträgt.

5. Gassack-Abdeckung nach einem der vorstehenden Ansprüche, dadurch gekennzeichnet, daß die Dicke der zweiten, außenseitigen Schicht (12) etwa 1 bis 3mm beträgt.

6. Gassack-Abdeckung nach einem der vorstehenden Ansprüche, dadurch gekennzeichnet, daß die beiden Schichten (10, 12) durch Spritzgießen miteinander in Verbund gebracht sind.

7. Gassack-Abdeckung nach einem der vorstehenden Ansprüche, dadurch gekennzeichnet, daß die zweite, außenseitige Schicht mit einer Beschichtung (14) aus einem Zweikomponenten-Urethan-Lacksystem versehen ist, das aus einem Haftvermittler und einem Decklack besteht.

8. Gassack-Abdeckung nach den Ansprüchen 2 und 3, dadurch gekennzeichnet, daß das Kautschukmaterial und das thermoplastische Material durch intensives Vermischen dynamisch vulkanisiert sind, wobei die Kautschukteilchen während des Vermischens und Dispergierens in situ vernetzt werden und ein Polymergemisch entsteht, bei dem kleine Elastomerpartikel gleichmäßig feindispers in einer Thermoplastmatrix verteilt sind.

9. Gassack-Abdeckung nach Anspruch 8, dadurch gekennzeichnet, daß beim Vermischen und dynamischen Vulkanisieren ein Vernetzungsmittel zugesetzt wird.

## Claims

1. A gas bag cover for a vehicle occupant restraining system, characterized in that the gas bag cover possesses as its main part a composite of two layers (10, 12) of a fully vulcanized polyolefinic material, which includes fully cross-linked rubber particles distributed in a continuous matrix of thermoplastic material, the hardness of the first layer (10) amounting to approximately 39 to 40 Shore D while the hardness of the outer second layer (12) amounts to approximately 45 to 73 Shore A.

2. The gas bag cover as claimed in claim 1, characterized in that the rubber material is terpolymer of ethylene, propylene and dienes.

3. The gas bag cover as claimed in claim 1 or in claim 2, characterized in that the thermoplastic material is a polypropylene.

4. The gas bag cover as claimed in any one of the preceding claims, characterized in that the thickness of the first layer (10) amounts to approximately 1 to 5 mm.

5. The gas bag cover as claimed in any one of the preceding claims, characterized in that the thickness of the outer second layer (12) amounts to approximately 1 to 3 mm.

6. The gas bag cover as claimed in any one of the preceding claims, characterized in that the two layers (10, 12) are caused to form a composite by injection molding thereof.

7. The gas bag cover as claimed in any one of the preceding claims, characterized in that the outer second layer is provided with a coating (14) of a two-component urethane lacquer system, which includes an adhesion promoter and a covering lacquer.

8. The gas bag cover as claimed in claim 2 and in claim 3, characterized in that said rubber material and said thermoplastic material are dynamically vulcanized by thorough mixing, said rubber particles being cross-linked in situ during mixing and dispersing, so that a polymer mixture is formed in which small elastomer particles are evenly and finely dispersed in a thermoplastic matrix.

9. The gas bag cover as claimed in claim 8, characterized in that a cross-linking agent is added during mixing and dynamically vulcanizing.

## Revendications

1. Recouvrement pour un coussin d'air d'un système de retenue pour les passagers d'un véhicule, caractérisé en ce qu'il présente comme pièce constitutive principale deux couches (10, 12), mises en liaison l'une avec l'autre d'une polyoléfine complètement vulcanisée, qui consiste en des particules de caoutchouc complètement réticulées, réparties dans une matrice continue de matière thermoplastique, et en ce que la première couche (10) atteint environ une dureté Shore D d'à peu près 39 à 40 et la seconde couche (12), située du côté extérieur, une dureté Shore A d'à peu près 45 à 73.

2. Recouvrement pour un coussin d'air selon la revendication 1, caractérisé en ce que la matière en caoutchouc est un terpolymère en éthylène, propylène et diène.

3. Recouvrement pour un coussin d'air selon la revendication 1 ou 2, caractérisé en ce que la matière thermoplastique est un polypropylène.

4. Recouvrement pour un coussin d'air selon l'une des revendications précédentes, caractérisé en ce que l'épaisseur de la première couche (10) atteint à peu près 1 à 5 mm.

5. Recouvrement pour coussin d'air selon l'une des revendications précédentes, caractérisé en ce que l'épaisseur de la seconde couche (12), située du côté extérieur atteint à peu près 1 à 3mm.

6. Recouvrement pour coussin d'air, selon l'une des revendications précédentes, caractérisé en ce que les deux couches (10, 12) sont mises en liaison l'une avec l'autre par injection.

7. Recouvrement pour coussin d'air, selon l'une des revendications précédentes, caractérisé en ce que la deuxième couche, située du côté extérieur, est pourvue d'un revêtement (14) réalisé en un sytème de vernis à deux composants d'uréthane, qui consiste en un agent adhésif et un vernis de recouvrement.

8. Recouvrement pour coussin d'air, selon les revendications 2 et 3, caractérisé en ce que la matière en caoutchouc et la matière thermoplastique sont vulcanisées de façon dynamique par mélange intensif, les particules de caoutchouc étant réticulées in situ pendant le mélange et la dispersion et un mélange polymère se produisant, dans lequel de petites particules élastomères sont réparties régulièrement dans une matrice thermoplastique par dispersion fine.

9. Recouvrement pour coussin d'air selon la revendication 8, caractérisé en ce que lors du mélange et de la vulcanisation dynamique, on ajoute un agent de réticulation.
